# EUROPEAN PATENT APPLICATION

(11) **EP 1 577 174 A1**
(43) Date of publication of application: **21.09.2005**
(21) Application number: 03786274.5
(22) Date of filing: 24.12.2003
(51) Int. Cl.: B60R 21/26

(54) **HIGH TEMPERATURE-PROCESSING METHOD FOR INFLATOR**

(30) Priority: 26.12.2002 JP 2002376022; 20.03.2003 JP 2003077052
(71) Applicant: DAICEL CHEMICAL INDUSTRIES, LTD., Osaka 590-8501 (JP)
(72) Inventor: YAMAKI, Kaoru, Himeji-shi, Hyogo 671-1152 (JP); NAKAZAWA, Yuji, Kako-gun, Hyogo 675-0151 (JP)
(74) Representative: Grünecker, Kinkeldey, Stockmair & Schwanhäusser Anwaltssozietät
(86) International application number: PCT/JP2003/016610
(87) International publication number: WO 2004/058544

(57) **Abstract**

The present invention provides a high temperature treating method for inflators for an air bag with an excellent workability.

The present invention is a high temperature treating method for inflators for an air bag provided with a step of cutting and removing wire harnesses connected for inflator actuation, a step of performing grouping according to main metals constituting inflators, and a step of charging the inflators which have been subjected to treatment in the preceding steps into a thermally treating tower to conduct thermal treatment at a temperature at which gas generating materials inside the inflators burn and the main metals constituting inflators do not melt.

## Description

### Technical Field where the Invention belongs

The present invention relates to a high temperature treating method for inflators for an air bag in which inflators for an air bag for an automobile accommodating gas generating materials therein are heated at a temperature equal to or higher than igniting temperatures of the gas generating materials to treat the inflators, and a metal recovering method.

### Background Art

Recently, since new cars equipped with an air bag (s) has increased, a great deal of inflators accommodating gas generating materials therein will hereafter are seen at scrapping of these cars equipped with air bags. Therefore, from the viewpoint of safety and effective utilization of resources, it is necessary to ignite the gas generating materials by thermal treatment safely to recover metals and the like therefrom. Under such circumstances, a recovery/treatment system for inflators for an air bag is being started.

For treatment of inflators for an air bag, it is also required to ensure safety during treatment and prevent harmful substances from being generated in addition to igniting accommodated gas generating materials by a thermal treatment and recovering/reusing useful resources such as metals.

However, as the inflators for an air bag, there are about 20 different types of inflators including one for a driver's side, one for a front passenger's side, one for a side collision, one for a curtain air bag and the like, and these inflators are different in shape, size, materials or the like. Further, even equivalent inflators for a driver's side are different in shape, size, material and the like depending on respective manufacturing companies, and it is therefore difficult to apply a standardized treatment method to these inflators.

Further, when a treating method is applied erroneously, it is expected that harmful substances may be generated during the treatment or an unexpected explosion may occur. Furthermore, when melting treatment is applied for recovering metals from a treated inflator, damages to a treatment equipment due to water vapor explosion, molten metal scattering or the like may occur or the body of a worker may be endangered, and excellent workability in recovery and reuse of metals is further required.

As a conventional technique relating to this invention, JP-A 11-101422 is mentioned.

### Disclosure of the Invention

An object of the present invention is to provide a high temperature treating method for inflators for an air bag which can treat an inflator for an air bag, such as failure products produced in a manufacturing process safely and efficiently and can promote recovery and reuse of useful materials, and a metal recovering method for inflators for an air bag utilizing the high temperature treating method.

As a solving means of the above problems, the present invention provides a high temperature treating method for inflators for an air bag comprising:
a step of cutting and removing a wire harness connected for actuation of an inflator;
a step of performing separation according respective kinds of main metals constituting the inflators; and
a step of charging the inflators which have been subjected to the preceding steps into a thermally treating tower to conduct heat-treatment of the inflators at a temperature at which gas generating materials inside the inflators are burnt and the main metals constituting the inflators are not melted.

The present invention includes the above-described steps as basic steps, and besides that other steps can be added, as needed, the order of the steps can be properly modified according to actual circumstances of a work site.

As other solving means of the above problems, the present invention further provides a method for recovering metals constituting inflators after the treatment has been terminated by a high temperature treating method for inflators for an air bag according to any one of claims 1 to 12, wherein
a step of cooling the interior of the thermally treating tower after the thermally treating step is terminated and then melting the inflators after the inflators are taken out is provided.

Inflators for an air bag, which are treatment subjects in the present invention, include all inflators required for treatment from various reasons, for example, failure products produced in a manufacturing step, returned articles from an automobile manufacturer or a module manufacturer, stock products after manufacturing thereof have been stopped, inflators which have been removed from scrapped vehicles.

According to the high temperature treating method for inflators and the metal recovering method in the present invention, treatment can be performed safely with an excellent workability, and besides that generation of harmful substances such as dioxins can be remarkably suppressed and recovery and reuse of useful materials can be promoted.

### Brief Description of the Drawings

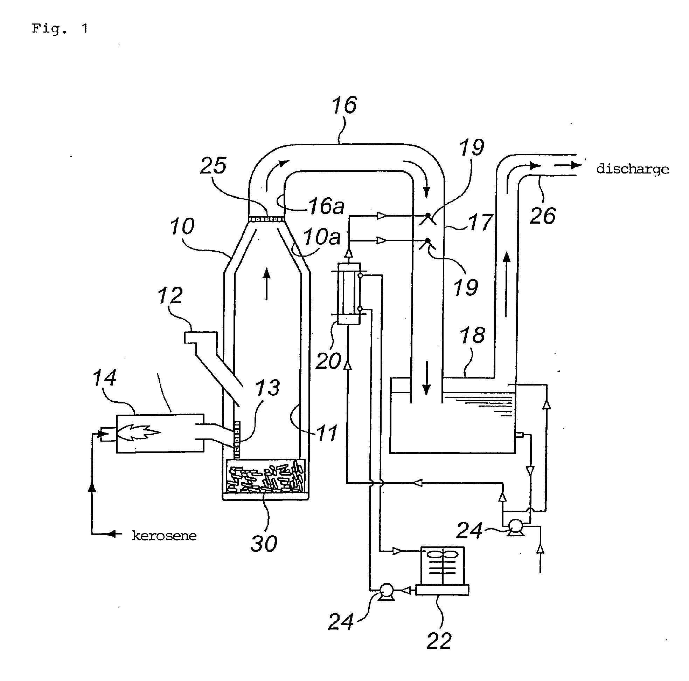

Fig. 1 is a diagram for explaining a high temperature treating method of the present invention.

### Explanation of Numerals

- 10: thermally treating tower
- 12: inflator charging port
- 14: combustion furnace
- 16: exhaust gas tube
- 17: cooling tower

### Preferred Embodiment of the Invention

### (1) Embodiment 1

A high temperature treating method of the present invention will be explained for each of steps below. However, as long as the object of the present invention can be achieved, the respective steps can be properly changed in the order thereof, an ordinary modification conducted by those skilled in the art can be applied to the steps. Accordingly, symbols attached to respective steps are for convenience of explanation and they are not limited to the order of the steps.

### (A) Step

A treatment in a step of cutting and removing wire harnesses connected for inflator activation is performed. The treatment in (A) step is conducted before (E) step of conducting heating treatment.

Inflators for an air bag which are treatment subjects in the present invention include failure products produced in the manufacturing process as described above and the like, and these inflators include ones with various shapes, sizes and materials mixedly, but all the inflators are mounted with wire harnesses for inflator actuation.

The wire harness is connected to an igniter housed in the inflator and it is for allowing electrical current conduction from a power source (a battery) to activate the igniter at an actuation of the inflator. When the wire harness is cut in advance at a recovery of the inflator, the inflator is transported to a treatment equipment in a state that it has a wire harness attached thereto and in a state that it is received in an exclusive inflator case since there might be a possibility that an igniter causes malfunction and a gas generating material burns during transportation of the inflator or the like.

However, the wire harness is constituted by covering conductive wires with plastic material, and when it is treated at a high temperature as it is, dioxins may be generated, so that the wire harness is cut and removed in this step. It is desirable to conduct the cutting at a root portion (a portion connected to the inflator) of the wire harness as much as possible.

### (B) Step

Next, treatment in a step of removing plastic parts housed in the inflator is performed. The treatment in (B) step is performed before (E) step of conducting thermal treatment.

Since a plastic part(s) such as an inflator cover is attached to an inflator depending on the kind of the inflator, other plastic parts are also removed for the same reason as the case of the cutting and removing of the wire harnesses.

### (C) Step

Next, a treatment in a step of performing grouping according to respective kinds of main metals constituting the inflators and receiving the grouped main metals in receiving boxes as needed is performed. This step is for performing grouping according to respective groups of parts made from identical material in advance in view of the entire workability.

In the treatment in (C) step, since an outer shell container (a housing, a diffuser shell, a closure shell and the like) made of metal usually occupies the dominant ratio of constituent metals of each inflator, inflators are grouped to respective groups of metals constituting the outer shell containers.

Since aluminum, iron or stainless steel is generally used as the outer shell container of the inflator, grouping is performed to groups of these metals. Aluminum can be grouped easily with visual confirmation, and iron and stainless steel are grouped with visual confirmation or using a magnet together with the visual confirmation, as needed.

In (C) step, the inflators after grouped are received in respective receiving boxes. Especially, when the inflators are of mechanical types, when they are packed in a large container at random, there occurs a possibility that, when igniters come in contact with each other, or when an igniter comes in contact with another metal, the igniter may cause malfunction so that a gas generating material might be ignited and burnt. Therefore, in order to avoid such an incident, it is desirable that the inflators may be accommodated in a receiving container made of plastic or the like such that igniters of inflators do not come in contact with each other.

### (D) Step

Next, a treatment in a step of grouping the inflator for every shape to accommodate them in receiving boxes as needed is performed. This step is for separating the inflators for every same shape in advance in view of the entire workability like (C) step.

In the treatment in (D) step, inflators are grouped into disk-shaped inflators and cylinder-shape inflators. In general, many of inflators for a driver's side have the disk shape, and many of the side inflators and curtain inflators have the cylinder shape. Both of the disk-shaped inflator and the cylinder-shape inflator are used as the inflator for a front passenger's side. Incidentally, when the inflators are cylinder-shaped, a step of grouping the inflators into pyrotechnic ones and hybrid-type ones can further be added.

In (D) step, it is desirable to receive the inflators after grouped into receiving boxes for the same reason as (C) step.

In (C) and (D) steps, from the viewpoint of improving workability in the subsequent steps, when inflators are grouped utilizing both of main metals constituting inflators and shapes thereof as selection references, it is desirable to receive inflators having identical outer-shell metals and identical shapes in the same receiving box.

The treatments in (C) and (D) steps may be performed before (A) and (B) steps, but it is preferable that the treatments are conducted after the steps (A) and (B) in order to performs the treatments efficiently in view of the work flow. Further, the treatments in (C) and (D) steps are performed before (E) step of conducting heating treatment.

### (E) Step

Next, treatment in a step of charging the inflators which have been subjected to the treatments in (A) to (D) steps which are the preceding steps into a thermally treating tower to conduct thermal treatment on them at a temperature at which gas generating materials in the inflators are burnt and main metals constituting the inflators are not melted is performed.

As shown in Fig. 1, for example, a thermally treating tower 10 preferably constitutes one treating system (a thermal treatment equipment) as a whole by being attached with an exhaust gas tube 16, an inflator charging port 12, a combustion furnace (for example, a combination of a high calorie burner and a low calorie burner) 14, a cooling tower of exhaust gas 17, a shower for cooling exhaust gas 19, a cooling tower tank 18, and a gas discharging tube 26 along with the thermally treating tower 10. The numerals 13 and 25 denote wire meshes, punching metals, gratings made of metal such as iron or the like, the numeral 20 denotes a heat exchanger, the numeral 22 denotes a cooling tower, and the numeral 24 denotes a pump. Incidentally, a metal partition wall 11 (with reference to Fig. 1) having the same function as that disclosed in Fig. 1 and the like in JP-A 11-101442 (a protection function of an inner wall of the heating and activating tower 10) can be provided inside the heating and activating tower 10. In addition to the system shown in Fig. 1, another apparatus or system can be combined thereto, as needed.

Inflators 30 charged form the inflator charging port 12 into the thermally treating tower 10 are heated at a predetermined temperature or more to ignite and burn gas generating materials housed therein. The thermal treatment temperature in the thermally treating tower 10 is a temperature at which the gas generating materials housed in the inflators 30 burn but the main metal constituting the inflators 30 does not melt.

The temperature at which the gas generating material burns is a temperature equal to or more than an ignition temperature of the gas generating material, and the ignition temperature varies depending on the composition of the gas generating material. The ignition temperature of an ordinary gas generating material is in the range of about 150 to 500°C, but since there might be a possibility that when the temperature in the thermally treating tower becomes excessively high, an inner wall of the thermally treating furnace 10 is damaged, the temperature inside the thermally treating tower 10 is preferably in the range of 150 to 800°C, more preferably in the range of 150 to 700°C. Incidentally, in the case of an inflator provided with an automatic igniting material (for example, which is described in Paragraph number 86 in JP-A 2000-335361 and shown in Fig. 12 thereon), the ignition temperature of the gas generating material may be about 150°C.

The temperature at which the main metals constituting the inflators do not melt varies depending on the material of the inflator, but since the material is ordinarily aluminum, iron or stainless steel, a temperature lower than a temperature at which these metals melt is set to an upper limit temperature. In the case of aluminum, it is preferable to set the temperature in the range of 450 to 550°C, and in the case of iron and stainless steel, it is preferable to set the temperature to 550 to 700°C. It is desirable to consider a point of preventing damage to the thermally treating furnace 10 due to heat like the above.

The combustion gas is discharged from the exhaust gas tube 16 connected to a ceiling portion of the thermally treating tower 10, it is cooled inside the cooling tower 17 by water spaying due to shower for cooling 19, and it is guided into water inside the cooling tower tank 18. A gas staying in the cooling tower tank 18 is discharged from the gas discharging tube 26 into the atmosphere.

In the thermal treatment inside the thermally treating tower 10, it is preferable that a temperature inside the thermally treating tower 10 is preliminarily elevated by the combustion furnace 14 up to a temperature (for example, 650°C) at which the gas generating materials inside the inflators 30 burn but the main metals constituting the inflators 30 do not melt and the elevated temperature is maintained. As this temperature-elevating and maintaining method, a method for causing the high calorie burner and the low calorie burner to burn simultaneously, and stopping the high calorie burner at a time point at which the temperature reaches a predetermined temperature to cause only the low calorie burner to burn can be applied. At this time, an air blowing amount into the thermally treating tower 10 may be adjusted simultaneously.

After the inflators 30 are charged into the thermally treating tower 10, the above-described predetermined temperature is maintained until the treatment of the inflators 30 is terminated. Even in the case of a method where the inflators 30 are charged plural times and the inflators 30 are treated in the charging order, the above predetermined temperature is maintained until the treatment of the inflator(s) charged latest is terminated.

When the combustion furnace 14 is stopped just after charging the inflators 30, there might be a case that actuation of the inflators (combustion treatment of the gas generating materials) is not performed sufficiently. From the viewpoint of preventing such an event from occurring, it is preferable that the temperature control as described above is conducted.

The maintaining time of the predetermined temperature in the heating-treatment step is determined such that a time equal to or more than at least a time required for treatment of the inflators is secured by confirming both or one of a time elapsing before all gas generating materials, enhancers, chemical substances such as a primer inside an inflators are activated (in the hybrid inflators, a time elapsing before gases charged therein rupture the rupturable plates to discharge the charged gases, namely, a time required for treatment of the inflators), this time being obtained by a heating test where an inflator is exposed to a temperature atmosphere to be treated in the heating and activating tower 10, and a time required for treatment confirmed by a bomb fire test of the inflator (a test for observing an actuation state of an inflator in a state where the inflator is exposed in a flame).

From the viewpoint of actuating an inflator securely, the maintaining time of the predetermined temperature in the thermal treatment step is preferably 1 to 100 times a time required after the inflators are charged, or after the inflators are charged latest when charging of inflators are divisionally conducted plural times, before the treatment of the inflators is terminated, more preferably 3 to 30 times.

As the treating method in the thermally treating tower 10, besides the above, a method in which the temperature inside the thermally treating tower 10 is elevated in the vicinity of an ignition temperature of a gas generating material in advance and performing a temperature is risen rapidly after charging inflators 30; or a method in which the normal temperature or a temperature sufficiently lower than an ignition temperature of a gas generating material inside the heating and activating tower 10 is maintained and a temperature is gradually risen after charging inflators 30, can be adopted.

Incidentally, though there might be a possibility that inflators 30 jump up and down utilizing pressures generated at a combustion time of gas generating materials as propelling forces during thermal treatment inside the heating and activating tower 10, the partitioning means 25 comprising a wire mesh, a punching metal, a metal-made grating or the like is removably mounted between the heating and activating tower 10 and the exhaust gas tube 16, so that the inflators 30 are prevented from jumping out of the thermally treating tower 10. The partition means 25 is removably mounted to a flange portion provided at an inner wall surface 10a of the thermally treating tower 10 or an inner wall surface 16a of the exhaust gas tube 16 by using bolts and nuts. Further, by providing a partition means 13 functioning in the same manner as the partition means 25 between the thermally treating tower 10 and the combustion furnace 14, the inflator(s) 30 is prevented from jumping into the combustion furnace 14.

From the viewpoint of prevention of erroneous actuation of an inflator due to an emergency lightning before treatment, it is desirable that the treatments of the steps prior to (E) step of conducting thermal treatment is performed in an indoor facility provided with a lightning rod. From the same reason, it is desirable that, even when inflators are reserved temporarily prior to treatment, they are reserved in an indoor facility provided with a lightning rod.

### (2) Embodiment 2

A metal recovering method of the present invention will be explained below for each step. The metal recovering method is a treatment method for inflators, which is conducted subsequent to the high temperature treating method for inflators explained in the Embodiment 1.

### (F) Step

After the treatments in (A) to (E) steps according to the high temperature treating method for inflators are terminated, a treatment in a step of cooling the interior of the thermally treating tower 10 to take out the inflators 30 and cutting the inflators 30 taken out is conducted.

As the inflators, there are ones whose outer shell containers have an apparently sealed structure (which is not a completely sealed structure and has a nearly sealed structure where a clearance(s) is fine) or ones which have a structure in which water is easily entered and stayed. Especially, when the inflators are considered in view of materials thereof, in inflators where a main metal constituting an inflator is iron or stainless steel, and when the inflators are considered in view of kinds of the inflators, as hybrid inflators, there are ones required for cutting.

Incidentally, since these inflators have been subjected to the heating treatment step, there are not any inflators having a completely sealed structure regarding these structures, and if the main metal constituting an inflator is aluminum, a cutting step may be eliminated.

When inflators having such a structure are subjected to a melting treatment in the next step for recovering metal, there might be a possibility that inflators having an apparently sealed structure cause expansion and explosion to scatter molten metal, and inflators in which water is entered and stays may cause water vapor explosion. Even in either case, it is expected that the facility is damaged, or danger is posed to the body of a worker in certain circumstances. For this reason, the inflators are cut off to prevent such an accident from occurring.

A method for cutting is not limited to a specific one, but, for example, a shearing machine or a high speed cutting machine having a cutting blade rotating at a high speed, such as a resinoid cutting whetstone, a chip saw or the like, can be used.

The cut state of the inflator may be one which does not cause such an accident as described above, and the inflator can be ordinarily cut to have the outer shell container divided from a central portion thereof.

### (G) Step

Next, after the inflators which have been subjected to the treatments in (A) to (F) steps are subject to a melting treatment for heating them at their melting temperatures or more for each of main metals (in an ordinary case, aluminum, iron and stainless steel) constituting the inflators, they are reused as metal resources.

The high temperature treating method and the metal recovering method of the present invention can be applied as a treating method for various inflators such as an inflator for an air bag for a driver's side, an inflator for an air bag for a front passenger's side, an inflator for a side air bag, an inflator for a curtain air bag, an inflator for a knee-bolster, an inflator for an inflatable seat belt, an inflator for a tubular system and an inflator for a pretensioner.

### Examples

The present invention will be explained below further in details on the basis of examples, but the present invention is not limited by these examples.

### Example 1

### (A), (B) steps

Wire harnesses connected to igniters of respective inflators were removed. Incidentally, when wire harnesses were connected directly to inflators, the wire harnesses were cut from roots thereof by snips or a nipper, and when wire harnesses were connected to inflators via connectors, the connectors were pulled out by a pulling-off jig. Further, plastic parts equipped in the inflators were removed simultaneously therewith.

### (C), (D) Steps

Recovered inflators were grouped according to respective main metals constituting outer shell containers (aluminum, iron and stainless steel) and shapes thereof.

### (E) Step

A high temperature treatment was conducted on inflators for a driver's side (having a disk shape, a diameter of about 70 mm and a thickness of about 28mm; a housing is made of stainless steel having a melting point of 1450 to 1650°C; an amount of a gas generating material is 40g and an ignition temperature thereof is 223°C) of the inflators grouped in the previous steps.

The combustion furnace 14 was actuated to raise the temperature inside the thermally treating tower 10 to about 650°C and maintain the temperature in advance. The total number of 200 inflators 30 were charged from the inflator charging port 12 into the thermally treating tower 10 under such a temperature atmosphere in ten parts at intervals of 6 minutes. The temperature inside the thermally treating tower 10 was maintained at a temperature of 650°C for about 20 to 25 minutes after the tenth charging of the inflators 30. Incidentally, since the time required for treating 20 inflators 30 was in the range of 83 to 326 seconds as a result of the confirming test, the high temperature treatment of the inflators 30 is completed by holding the inflators at the predetermined temperature for 4 to 16 minutes inside the thermally treating tower 10.

Gas generated due to that the gas generating materials inside the inflators 30 were ignited and burnt was fed from the exhaust gas tube 16 to the cooling tower 17, and, after cooled therein by water spaying conducted by the shower for cooling 19, it was guided into water inside the cooling tower tank 18. The gas accumulated inside the cooling tower tank 18 was discharged from the gas discharging tube 26 into the atmosphere. The temperature of the gas at the discharging time was about 50°C.

Incidentally, when the gas inside the exhaust gas tube 16 was picked and measured, the density of dioxins was equal to or less than 0.25 ng - TEQ/Nm3. The analysis depended on "DIOXINS MEASUREMENT MANUAL IN WASTE MATTER TREATMENT" prepared by the Waste Management Section of the Water Supply and Environmental Sanitation Department of the Environmental Health Bureau of the Ministry of Health and Welfare.

### Example 2

After the heating treatment in Example 1 was terminated, burning in the combustion furnace 14 was stopped and the temperature inside the thermally treating tower 10 was cooled down to the ordinary temperature. Thereafter, the inflators 30 were taken out, they were cut into two divided pieces by a high speed cutting machine (SK - 3S type manufactured by SHOWA KOGYO INC.) utilizing a resinoid cutting whetstone as a rotating cutting blade. The cut pieces of inflators were supplied for melting treatment for metal recovery.

## Claims

1. A high temperature treating method for inflators for an air bag, comprising:
a step of cutting and removing wire harnesses connected for inflator activation;
a step of performing grouping according to main metals constituting inflators; and
a step of charging the inflators which have been subjected to treatment in the preceding steps into a thermally treating tower to conduct thermal treatment at a temperature at which gas generating materials inside the inflators burn and the main metals constituting inflators do not melt.

2. A high temperature treating method for inflators for an air bag according to claim 1, further comprising a step of removing plastic parts prior to the step of conducting heating treatment.

3. A high temperature treating method for inflators for an air bag according to claim 1 or 2, further comprising a step of performing grouping according to the shapes of the inflators prior to the step of conducting thermal treatment.

4. A high temperature treating method for inflators for an air bag according to claim 3, wherein the shapes of the inflators are disk-shaped or cylinder-shaped.

5. A high temperature treating method for inflators for an air bag according to claim 4, wherein, when the shapes of the inflators are cylinder-shaped, the inflators are grouped to either of a pyrotechnic inflator and a hybrid-type inflator.

6. A high temperature treating method for inflators for an air bag according to any one of claims 1 to 5, wherein the main metals constituting inflators are aluminum, iron or stainless steel constituting outer shell containers of the inflators.

7. A high temperature treating method for inflators for an air bag according to any one of claims 1 to 6, comprising, in the following order;
(A) step of cutting and removing wire harnesses connected for inflator actuation,
(B) step of removing a plastic part,
(C) step of performing grouping according to main metals constituting inflators to receive the inflators in a receiving box as occasion demand,
(D) step of performing grouping according to the shapes of the inflators to receive the inflators in a receiving box as needed, and
(E) step of charging the inflators which have been subjected to treatment in the preceding steps into a thermally treating tower to conduct thermal treatment at a temperature at a temperature which gas generating materials inside the inflators burn and the main metals constituting inflators do not melt.

8. A high temperature treating method for inflators for an air bag according to claim 7, wherein, in the (C) and (D) steps, the inflators are grouped using both of the main metal constituting an inflator and the shape thereof as selection references to receive inflators having identical metals and shapes in the same receiving box.

9. A high temperature treating method for inflators for an air bag according to any one of claims 1 to 8, wherein the treatment in the step preceding to the thermal treatment step or reservation of the inflators before treatment is conducted in an indoor facility provided with a lightning rod.

10. A high temperature treating method for inflators for an air bag according to any one of claims 1 to 9, wherein the step of conducting thermal treatment is a step of conducting charging treatment of the inflators after the temperature inside the thermally treating tower is elevated up to a temperature at which the gas generating materials inside the inflators burn and main metals constituting an inflator do not melt, and
after inflator charging, or after the last inflator charging when divisionally charging inflators plural times, the temperature is maintained for a time of 1 to 100 times a time required to terminate treatment of the inflator.

11. A high temperature treating method for inflators for an air bag according to claim 10, wherein, after inflator charging, or after the last inflator charging when divisionally charging inflators plural times, the temperature is maintained for a time of 3 to 30 times a time required to terminate treatment of the inflator.

12. A high temperature treating method for inflators for an air bag according to any one of claims 1 to 11, wherein the inflators are treated using a thermal treatment equipment provided with a thermally treating tower, an inflator charging apparatus to the thermally treating tower, a heating apparatus inside the thermally treating tower, and a cooling apparatus of a gas exhausted from the thermally treating tower.

13. A method for recovering metals constituting inflators after the treatment conducted by the high temperature treating method for inflators for an air bag according to any one of claim 1 to 12, wherein
the method comprising a step of cooling the interior of the thermally treating tower, after the step of conducting thermal treatment is terminated, and melting the inflators after the inflators are taken out.

14. A metal recovering method for inflators for an air bag according to claim 13, comprising a step of cutting the inflators prior to the step of melting the inflators.

15. A metal recovering method for inflators for an air bag according to claim 14, wherein the inflator-cutting step is applied to an inflator having outer shell container with an apparently sealed structure or with a structure in which water is easily entered or stayed inside the inflator.
